# EUROPEAN PATENT APPLICATION

(11) **EP 2 063 647 A1**
(43) Date of publication of application: **27.05.2009**
(21) Application number: 07121469.6
(22) Date of filing: 24.11.2007
(51) Int. Cl.: H04N 13/00

(54) **Calibration of a 3-dimensional display**

(71) Applicant: Barco NV, 8500 Kortrijk (BE)
(72) Inventor: Kimpe, Tom, 9000, Gent (BE)
(74) Representative: Hertoghe, Kris Angèle Louisa

(57) **Abstract**

A method (200) is described for calibrating a display system adapted for generating three dimensional images by combining at least first sub-image information and second sub-image information. The method comprises obtaining (210) at least information about the displaying of a first sub-image and information about the displaying of a second sub-image. Furthermore, the method comprises determining (220) display parameters for further displaying using the display system based on a human vision system taking into account information about the displaying of a first sub-image and information about the displaying of a second sub-image. The invention also relates to a method for displaying and a corresponding calibration and display system.

## Description

### Technical field of the invention

The present invention relates to 3 dimensional display systems. More particularly, the present invention relates to methods and systems for calibrating, controlling and/or driving 3 dimensional display systems, e.g. stereoscopic display systems or holographic display systems.

### Background of the invention

In order to guarantee the required display properties, 2-dimensional display systems are frequently calibrated with respect to their display properties and parameters. Such adjustment of the display properties of a 2-dimensional display system are often carried out at the beginning of a phase of use of the display. Improved versions provide adjustment of display properties and parameters of the display system in real time. The control, adjustment and/or calibration is often based on the sensor output of a sensor determining the display properties at start-up or during operation.

For regular "2D-displays" the medical imaging community heavily makes use of display calibration (DICOM GSDF calibration) to make sure that the most subtle features are visible and that image quality is sufficient over the entire lifetime of the display. The latter is required for medical displays in order to be sufficiently reliable to be used in situations where important medical decisions are to be made.

It is clear that also for 3D displays similar calibration technology will be necessary. Traditional 2D calibration methods are not useful in the 3D case because of the completely different way of forming the image. Eg. In case of a 3D medical display that consists of the combination of two 2D displays and passive polarizing glasses (eg. the Planar stereomirror display) one could think that when the two individual displays are calibrated to DICOM GSDF then also the 3D display will be calibrated to DICOM GSDF. This is not the case. Each of the two 2D displays will have a different luminance range / contrast ratio. This means that even when the white point of both displays is set to the same value, then still the black point of the two displays will be different from each other. When calibrating these two 2D displays to DICOM GSDF then the resulting 3D display will not be compliant to DICOM GSDF. This is partially because DICOM GSDF is a standard that defines absolute luminance values and not relative luminance values. The 3D display will sum up the luminance of the two 2D displays and therefore this sum of two DICOM GSDF compliant displays will not be DICOM GSDF compliant. Secondly, the human visual system will perceive the binocular luminance not as the sum of the individual luminances. Therefore the 3D display will not "look" DICOM GSDF as well.

Furthermore, the use of 3-dimensional displaying in critical applications such as medical imaging, sets high requirements on the imaging quality. It is a challenge to obtain a sufficient image quality such that three dimensional imaging techniques such as for example stereoscopic or holographic displays can be used in life critical applications and for primary diagnosis.

### Summary of the invention

It is an object of embodiments of the present invention to provide good apparatus or methods for displaying three dimensional images and/or good apparatus or methods for calibrating such display systems and methods.

The above objective is accomplished by a method and device according to the present invention.

The present invention relates to a method for calibrating a display system adapted for generating three dimensional images by combining at least first sub-image information and second sub-image information, the method comprising obtaining at least information about the displaying of a first sub-image and information about the displaying of a second sub-image and determining display parameters for further displaying using the display system based on a human vision system taking into account information about the displaying of a first sub-image and information about the displaying of a second sub-image. It is an advantage of embodiments according to the present invention that an improved perception of displayed three dimensional images is obtained for the user.

Determining display parameters for further displaying may comprise determining separate display parameters for further displaying first sub-images based on a human vision system and determining separate display parameters for further displaying second sub-images based on a human vision system. It is an advantage of embodiments according to the present invention that methods and systems are provided allowing a perceptual linearisation of the three dimensional display.

Determining display parameters may comprise calculating a separate look up table for the further displaying of first sub-images and calculating a separate look up table for the further displaying of second sub-images. It is an advantage of embodiments according to the present invention that additional degrees of freedom in the calibration and set-up of the three dimensional display can be used to overcome limitations of the display system. It is an advantage of embodiments according to the present invention that a good flexibility for calibrating the display system is provided.

Determining separate display parameters for the further displaying of first sub-images and determining separate display parameters for the further displaying of second sub-images may provide an additional degree of freedom for enhancing the image quality. The additional degree of freedom is used for enhancing the image quality by any or a combination of increasing a bit depth, a colour gamut, a peak luminance, a contrast ratio or a depth resolution. It is an advantage of embodiments according to the present invention that particular characteristics of the displaying of three dimensional images can be improved.

The display system may comprise a plurality of imaging sub-systems for imaging sub-images and the method for calibrating may comprise determining display parameters for the plurality of imaging sub-systems so as to generate a different colour gamut in the different sub-images. It is an advantage of embodiments according to the present invention that calibration methods can be provided resulting in a large colour gamut of the overall display system. The latter may for example be obtained by using different primaries for left and right imaging.

The display system may comprise a plurality of imaging sub-systems for imaging sub-images and the method for calibrating may comprise determining display parameters for the plurality of imaging sub-systems so as to generate a different contrast ratio in the different sub-images. It is an advantage of embodiments according to the present invention that calibration methods can be provided resulting in a higher contrast ratio of the overall display system.

The display system may comprise a plurality of imaging sub-systems for imaging sub-images and the method for calibrating may comprise determining display parameters for the plurality of imaging sub-systems so as to generate a different bit depth in the different sub-images. It is an advantage of embodiments according to the present invention that calibration methods can be provided resulting in a higher bit depth of the overall display system.

It is an advantage that different properties can be combined. For example, the display could be adapted such that one type of sub-image, e.g. the left image, has higher bit depth but lower contrast ratio whereas another type of sub-image, e.g. the right image, has a lower bit depth but a higher contrast ratio. It is an advantage of embodiments according to the present invention that 3D images are obtained with high bit dept and with high contrast ratio.

Determining display parameters may comprise taking into account a contrast sensitivity function of the eye for in-plane information and a contrast sensitivity function for the eye for information in the direction substantially perpendicular to the display plane. It is an advantage of embodiments according to the present invention that differences of the contrast sensitivity function of the eye for different directions are taken into account. It is an advantage of embodiments according to the present invention that calibration methods can be provided improving three dimensional image perception. It is an advantage of embodiments according to the present invention that every greyscale or colour step of the three dimensional display can be made above the three dimensional perceptual just noticeable difference threshold.

Determining display parameters may comprise determining a modulation transfer function curve for a direction perpendicular to the plane of the display system or of the eye of the user. The modulation transfer function may describes what an optical system can reproduce as spatial frequency information. In case of the display it may describe how well the display can reproduce patterns, in case of the eye it may describe how well the eye (the lens of the eye) is able to image spatial frequency patterns on the retina of the eye. An equivalent of the modulation transfer function MTF is the point spread function PSF.

Taking into account information may comprise taking into account combined information about the displaying of a first sub-image and information about the displaying of a second sub-image. It is an advantage of embodiments according to the present invention that methods and system are provided resulting in a better perception of the three dimensional images displayed.

Determining may comprise determining display parameters for the displaying of the first sub-image dependent on both information about the displaying of a first sub-image and information about the second sub-image and/or determining display parameters for the displaying of the second sub-image dependent on both information about the displaying of a first sub-image and information about the second sub-image. It is an advantage of embodiments according to the present invention that for displaying of each type of sub-image, displaying characteristics for the displaying of other types of sub-images is taken into account, allowing to mimic the human vision process. It is an advantage of embodiments according to the present invention that good displaying of three dimensional images can be obtained.

The method further may comprise applying said determined display parameters to the display system adapted for generating three dimensional images.

Obtaining at least information about the displaying of a first sub-image and information about the displaying of a second sub-image may comprise obtaining a transfer curve for the displaying of first sub-images and a transfer curve for the displaying of second sub-images. It is an advantage of embodiments according to the present invention that the differences in displaying for the different sub-images are taken into account. Such differences may for example be induced by a difference in image panel used for displaying the sub-images, differences induced by the technique used for separating the sub-images, differences in luminance, differences in colour, differences in polarisation, differences in emission angle range, etc.

The human vision system may be a binocular human vision system.

Determining display parameters may comprise determining a binocular luminance and/or a binocular colour value.

Determining may be performed in real-time during displaying on the display system. It is an advantage of embodiments according to the present invention that continuous calibration of the display system can be provided, allowing to have more appropriate three dimensional displaying throughout the use of the system.

Determining display parameters may comprise taking into account predetermined standards for displaying images. It is an advantage of embodiments according to the present invention that methods and systems are provided that can be made compliant with a specific image standard, a specific brightness profile and/or a specific colour profile. The predetermined standards for displaying images may for example be the DICOM Greyscale standard display function GSDF, embodiments of the present invention not being limited thereto.

The display system may comprise a plurality of imaging sub-systems for imaging sub-images, wherein said sub-images are driven differently for generating the sub-images as function of the determined display parameters.

Determining display parameters may comprise determining display parameters depending on a position of the user of the display system. The method may comprise determining a position of at least one user of a display system.

Determining display parameters may comprise adjusting all display parameters upon variation of a position of one user. It is an advantage of embodiments according to the present invention that perception of three dimensional scenes can be good or Improved by taking into account the position of the user.

Determining display parameters may comprise determining display parameters for one or more emission angles and deriving from said determined display parameters, display parameters for other emission angles. In other words, one or more users may be marked as diagnostic and other users may be marked as reviews, display parameters for the latter being derivable from display parameters of the diagnostic users. It is an advantage of embodiments according to the present invention that perception of three dimensional images can be good or improved, while keeping the system computationally efficient.

Determining display parameters may comprise applying a filter based on a binocular human vision system or a three dimensional modulation transfer function. The filter may be applied to the input image data after the input image data has been Fourier transformed. The input image data may be image data at a plurality of levels, i.e. as inputted to an image processor, as inputted to a display system, etc. It may be part of the three dimensional input data, such as e.g. slices thereof, or it may be the full three dimensional image data. The applied filtering may be different for the different sub-images, e.g. left and right image. The filter also may be applied in the spatial domain, i.e. pixel domain. The filter may take into account not a single pixel but also other pixels from the image.

The present invention also relates to a method for displaying three dimensional images on a display system adapted for generating three dimensional images by combining at least first sub-image information and second sub-image information, the method comprising displaying at least first sub-images and second sub-images using display parameters determined based on a human vision system taking into account previously obtained information about the displaying of first sub-images and previously obtained information about the displaying of second sub-images. The method furthermore may comprise a method for calibrating as described above.

The present invention also relates to a calibration system for calibrating a display system adapted for generating three dimensional images by combining at least first sub-image information and second sub-image information, the system comprising obtaining means for obtaining at least information about the displaying of a first sub-image and information about the displaying of a second sub-image, and determining means for determining display parameters for further displaying using the display system based on a human vision system taking into account information about the displaying of a first sub-image and information about the displaying of a second sub-image.

The determining means may be adapted for determining display parameters for further displaying first sub-images based on a human vision system and determining display parameters for further displaying second sub-images based on a human vision system. The display parameters for further displaying first sub-images may be a first look up table for displaying of the first sub-images and the display parameters for further displaying second sub-images may be a second look up table for displaying of the second sub-images.

The determining means may be adapted for determining display parameters taking into account combined information about the displaying of a first sub-image and information about the displaying of a second sub-image.

The calibration system may comprise application means for applying said determined display parameters to the display system.

The obtaining means may comprise a sensor adapted for obtaining separate information regarding displaying of first sub-images and/or separate information regarding displaying of second sub-images.

The present invention also relates to a display system adapted for generating three dimensional images by combining at least first sub-image information and second sub-image information, the display system being adapted for displaying at least first sub-images and second sub-images using display parameters determined based on a human vision system taking into account previously obtained information about the displaying of first sub-images and previously obtained information about the displaying of second sub-images. The display system may comprise a calibration system as described above.

The present invention also relates to a computer program product for, when executed on a computer, performing a method for calibrating a display system as described above. The present invention furthermore relates to a machine readable data storage device storing such a computer program product and the transmission of such a computer program product over a local or wide area telecommunications network.

Particular and preferred aspects of the invention are set out in the accompanying independent and dependent claims. Features from the dependent claims may be combined with features of the independent claims and with features of other dependent claims as appropriate and not merely as explicitly set out in the claims.

The teachings of the present invention permit the design of improved methods and apparatus for displaying three dimensional images, resulting in a better perception of displayed scenes by the users. The latter may be advantageous in numerous applications, one of them being imaging in medical applications, where an appropriate perception may be essential for performing accurate diagnostics or medical treatment.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG. 1 illustrates the Fechner's paradox on perceived brightness in a binocular human vision system, as may be taken into account in embodiments of the present invention.
FIG. 2 illustrates a difference in received image data between left and right eye for an off-axis user of a display system.
FIG. 3 shows an exemplary flow diagram of steps in a method for calibrating a three dimensional display system according to an embodiment of the present invention.
FIG. 4 shows an exemplary calibration system according to an embodiment of the present invention.
FIG. 5 shows an exemplary display system according to an embodiment of the present invention.
FIG. 6 illustrates a computing device that may be used for performing calibration methods according to an embodiment of the present invention.
FIG. 7 to FIG. 10 illustrate different routines or sub-routines that may be used in method embodiments for calibrating according to embodiments of the present invention.
FIG. 11a to FIG. 11c show the contrast sensitivity functions in plane (FIG. 11a) and perpendicular to the display plane (FIG. 11b) as well as the corresponding boosting in the depth direction (FIG. 11c), as can be used in embodiments according to the present invention.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention. The following terms are provided solely to aid in the understanding of the invention. With three dimensional imaging or three dimensional display system there is meant any technique capable of obtaining, generating or providing three-dimensional visual information or generating the illusion of depth in an image. The latter may be performed by presenting a slightly different image to each eye. Examples of techniques that may be used are stereoscopic imaging techniques or holographic techniques. Stereoscopic as well as holographic imaging may be performed in black and white images, greyscale images and colour images. The number of views used in the three dimensional imaging system is not limited to a system based on left eye and right eye views. The system may be a two-view system, but also relates to multi-view display systems where there are more than 2 views. For example a 6 view stereo display system will have 3 pairs of left and right images. Advantage is that if the user walks around the display that then also the perception of the object will change, if different image information is generated for the two other L/R pairs. The systems and methods thus may be adapted for calibrating two or more "eyes", e.g. views, of the display system. The system may also be a holographic display system where there is no discrete number of views anymore but where continuous wave fronts are generated.

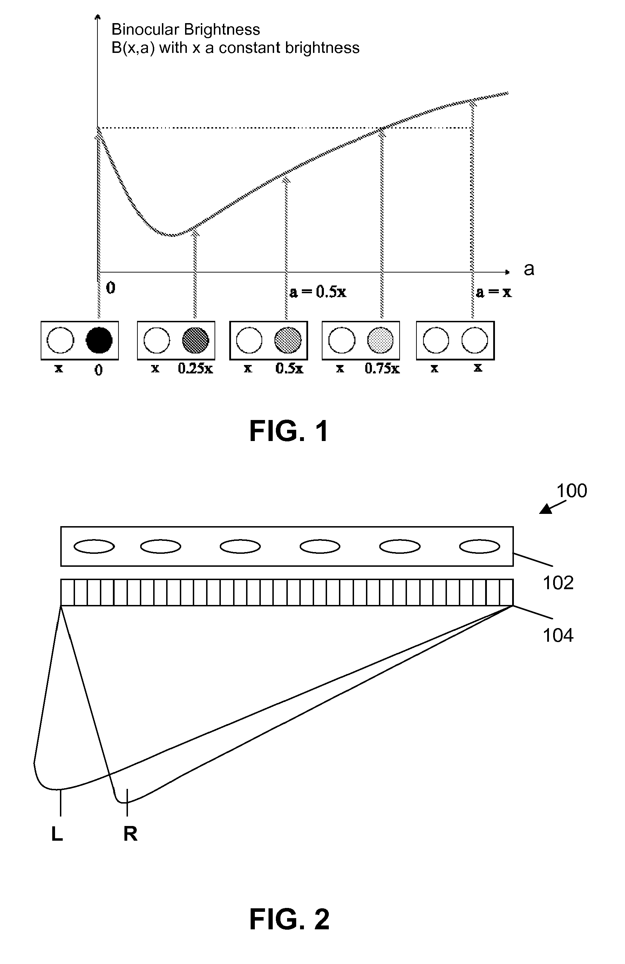

Three dimensional imaging techniques can be used to provide the user with a more realistic perception of a situation that is displayed. The human vision system, which is a binocular system, is to a large extent influenced by perception of optical stimuli. It is a complex system, as can be seen e.g. in the fact that binocular perception of brightness does not correspond with the sum of the inputs of both views. A stimulus can look brighter even if less light is entered in the eyes. The latter is known as the Fechner's Paradox. The binocular human vision system is, for example, described in more detail for example in "Fechner's paradox in binocular contrast sensitivity" in Vision Res. 25 (1985) 609-613 and "Binocular brightness: a suppression-summation trade off" in Can. J. Exp. Psychol. 48 (1994) 418 - 434. An illustration of the Fechner's paradox is provided in FIG. 1. If a test of the binocular vision system is performed and one eye is partly covered with a neutral density with a transmittance a, the overall perceived binocular brightness is as shown in FIG. 1. Different particular situations for the transmittance of the neutral density filter covering one eye are explicitly indicated. It thus can be seen that, when the received brightness for one eye is reduced with 75%, the perceived binocular brightness is substantially lower than when the eye is completely blocked from light. The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

In a first aspect, the present invention relates to a method for calibrating a display system adapted for generating three dimensional images. Such display systems thereby may generate three dimensional images by combining at least first sub-image information and second sub-image information, the invention not being limited to binocular three dimensional display systems. As described above, multi-view systems with more than two views also may be used. As described above, such display systems may be for example holographic display systems or stereoscopic display systems. It is an advantage of embodiments of the present invention that calibration of such display system can be accurately performed, thus increasing the quality and/or accurateness of the perceived three dimensional images displayed. The method for calibrating such three dimensional imaging systems comprises obtaining information regarding the imaging of at least first sub-images, i.e. a first type of sub-images e.g. as meant for a first eye, and obtaining information regarding the imaging of second sub-images, i.e. a second type of sub-images e.g. as meant for a second eye. The method for calibrating includes the determination of display parameters for the displaying of three dimensional images using the display system, based on a human vision system taking into account this information. It is an advantage of embodiments according to the present invention that for three dimensional imaging, compensation can be provided for differences in luminance and/or color experienced by a first and second view, e.g. a left and right eye by taking into account information regarding the displaying of these images. The latter may be especially suitable in three dimensional imaging systems whereby off-axis viewing can be performed. The latter is illustrated by way of example in FIG. 2, indicating the different input obtained at a first view, e.g. left eye, and a second view, e.g. right eye. As in off-axis view the luminance may fall off quickly when the viewing angle is increased, embodiments of the present invention can greatly improve the perceived image quality for the user. In FIG. 2, a three dimensional display system 100 is shown using a backlight component 102 and a pixelated component 104. The left eye L of the user receives a different luminance and colour compared to the right eye R as it is more off-axis. These and other steps will be described in more detail below.

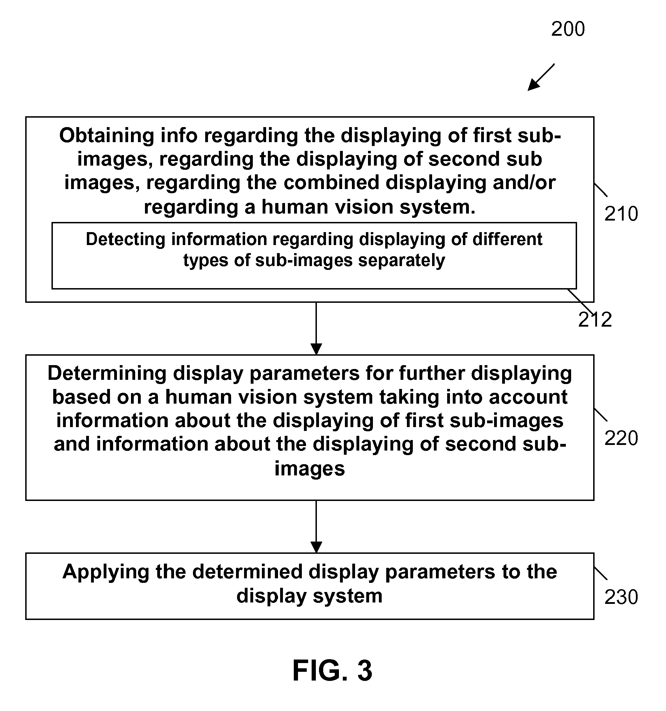

By way of illustration, the present invention not limited thereto, standard and optional steps of a method for calibrating according to embodiments of the present invention will be described in reference to an exemplary method for calibrating as indicated in FIG. 3.

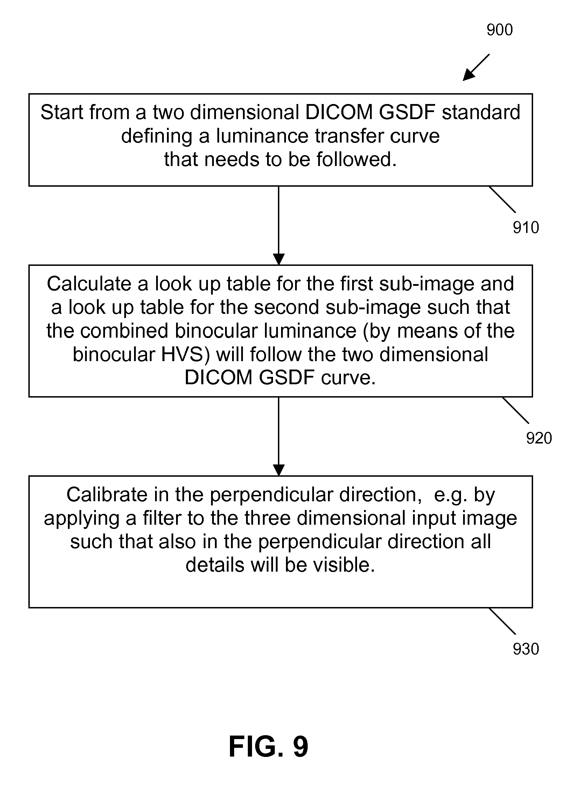

In a first step 210 of a method for calibrating 200 according to an embodiment of the present invention, the method comprises obtaining information regarding the displaying of first sub-images and information regarding the displaying of second sub-images. This information preferably is separate information, i.e. information for the displaying of first type sub-images and second type sub-images independently. However this information can also describe characteristics of the combination of or a relation between a first type sub-images and a second type sub-images. For example, obtaining information may comprise also obtaining information that cannot be directly linked to a first sub-image or a second sub-image separately, like for e.g. the spatial resolution of the three dimensional display along the depth axis. This is not a characteristic information that belongs to the first type sub-image or the second type sub-image separately, but rather to a combination of a characteristic from the first sub-image, a characteristic of the second sub-image and a characteristic of the display itself as a whole. For the particular example of the depth resolution of three dimensional display depends on the resolution of the first type sub-image, the resolution of the second type sub-image and the spacing distance between the pixels, i.e. the distance between neighbouring pixels of a first sub-image, the distance between neighbouring pixels of a second sub-image and the distance between pixels of the first type sub-image and the second type sub-image. Another example wherein the obtained information is combined information of the displaying of first type and second type sub-images is where a three dimensional DICOM GSDF calibration is performed, which will be illustrated by way of example below with reference to FIG. 9.

Obtaining such information may be performed in a plurality of ways. In one embodiment, such information may already exist and this information may be retrieved by receiving, e.g. in a processing means. Such information thus may for example be received from an external processing means, memory, recording means etc. Alternatively, obtaining such information may be performed by actually recording or detecting this information, as indicated in sub-step 212. Detecting such information may comprise detecting a signal comprising information related to or radiation properties of radiation used for the displaying of the first sub-images and detecting a signal comprising information related to radiation properties of the radiation used for the displaying of said second sub-images individually. Obtaining such information thereby may comprise, during detecting or recording such information, filtering the radiation used for displaying a predetermined type of sub-images, e.g. by filtering radiation with a particular wavelength or wavelength wave, filtering radiation with a particular polarisation state, filtering radiation emitted under a predetermined emission angle or within a predetermined emission range, etc. Obtaining may comprise selectively filtering between radiation used for displaying first sub-images and radiation used for displaying second sub-images. More generally, obtaining information may comprise selectively filtering radiation used for the different types of sub-images generated. Obtaining information further may comprise deriving information of the displaying of the individual sub-images based on the detected radiation. Obtaining information may comprise detecting radiation used for a number of different types of sub-images intended to be viewed by first views, while using this information for deriving information regarding the displaying of other types of sub-images intended to be detected by other views. Obtaining information also may comprise synchronising sensing of radiation properties of the radiation used for the displaying of predetermined sub-images with the displaying of these predetermined sub-images. Obtaining information also may comprise controlling a temporal filter in agreement with the displaying of the different types of sub-images. Alternatively or in addition thereto obtaining information may comprise detecting a signal comprising information related to radiation properties of the radiation used for the combined displaying of first and second type sub-images

Information about the displaying of different sub-images may comprise information about a transfer curve for the displaying of the different sub-images. Information about the displaying of different sub-images may also comprise information about the way a human visual system will perceive individual sub-images or the combination of sub-images. The way a visual system will perceive individual or perceived sub-images can be described e.g. but not limited to, by one or more (for different orientations) modulation transfer functions, one or more point spread functions, one ore more (for different orientations) contrast sensitivity functions, one ore more (for different orientations) Just Noticeable Difference (JND) curves...

In a second step 220, the method for calibrating 200 furthermore comprises determining display parameters for further displaying using the display system based on a human vision system taking into account information about the displaying of a first sub-image and information about the displaying of a second sub-image. Such a human vision system may be a three dimensional human vision system. In one embodiment, such a human vision system may be a binocular human vision system. By using such a human vision system, the method of the present invention allows mimicking the perception of three dimensional images, e.g. of a three dimensional scene, in a good and/or accurate way. Such a human vision system may for example take into account Fechner's paradox. The human vision system may for example be a binocular human vision system and may for example be as described in more detail for example in "Fechner's paradox in binocular contrast sensitivity" in Vision Res. 25 (1985) 609-613 or "Binocular brightness: a suppression-summation trade off" in Can. J. Exp. Psychol. 48 (1994) 418 - 434, embodiments of the invention not being limited thereto.

When a three dimensional human vision system is used, this may not only describe the behavior of the human vision system (HVS) in the plane of the display, but also may describe the behaviour of the human vision system in the 3^{rd} dimension of the display, i.e. perpendicular to the plane of the display, or more particularly to the plane having the same orientation as in the front of the display. The three dimensional HVS may be under the form of a set of 3D contrast sensitivity function curves (CSF). This set could for example consist of a "normal" CSF curve that describes the sensitivity of the eye relative to spatial patterns in the plane of the display or in a plane which has the same orientation as in the front of the display and, in addition thereto, a contrast sensitivity function curve CSF for the direction perpendicular to the plane of the display. Actually, the latter may have an absolute reference that is not the display but the plane of the eye. One could even go further and use a CSF for more than 2 directions. Eg. one CSF for horizontal direction (which can eg. be the same as the CSF for the vertical direction), one CSF for diagonal direction, one CSF for the direction perpendicular to the display plane, and one CSF for the diagonal direction perpendicular to the plane. From the contrast sensitivity functions a just noticeable difference (JND) curve can be generated in a similar way as has been done for two dimensional calibration, e.g. as in the DICOM GSDF standard. The difference here however is that in this case there will be a JND curve both for parallel and perpendicular direction relative to the plane of the display. The JND curves then can be used to perceptually linearise the display in a similar way as done for the DICOM GSDF standard, but now with an additional dimension. The latter allows that upon obtaining information for the different views regarding luminance curves, e.g. monitored in real time, using the three dimensional human vision system allows obtaining a combined three dimensional luminance and based on the 3D luminance transfer curve, a calibration LUT can be calculated optionally for in-plane and perpendicular plane. The just noticeable difference step in the Z direction may be larger than a just noticeable difference step in the x/y direction. This means that the data cannot anymore be rendered by a simple lookup table but that the 3D data should be taken into account. Indeed, if different pixels are looked at in the three dimensional space, then it is, according to an embodiment of the present invention, possible that a certain difference between the two pixels in one plane is needed to have one JND, but that actually the difference is made larger because otherwise there would be no visible difference in the z-direction. According to embodiments of the present invention different solutions can be applied for taking into account optional differences between just noticeable differences in different directions of the scene to be displayed. One solution is to start calculating the necessary pixel values in a kind of zigzag order, thus taking into account immediately JND in the in-plane direction and JND in the perpendicular direction. Another solution is to first process all the slices individually using the two dimensional CSF / JND curve and then use a fourier transform to go to the 3D frequency domain and apply there a boosting in the Z direction, the boosting being sufficient to cope with changes in JND in the Z-direction. Yet another solution is to apply boosting of both the in plane and perpendicular direction in the Fourier domain using a single filter operation. Still another solution is to apply this boosting of both the in plane and perpendicular direction in the spatial domain i.e. with the same filter (but now in the spatial domain) that can be applied in the Fourier domain. It is an advantage of embodiments according to the present invention that grey scale and colour steps can be made such that these are above the three dimensional perceptual just noticeable difference threshold. The latter results in a better perception of three dimensional images displayed. As a simplification it is also possible to determine a typical compensation to make sure that grey scale and colour steps are above the three dimensional perceptual just noticeable difference threshold. In other words: instead of calculating the required compensation based on the actual image contents it is possible to determine a typical compensation and apply this compensation for all images. The advantage is that far less computation power is required as it is no longer necessary to do calculate the required compensation for every image. It is also possible to use such typical compensation for e.g. the two directions in the plane of the display (eg. by means of a precomputed look up table), and then still apply a compensation (boosting) based on the actual image contents in the dimension perpendicular to the plane of the display (by applying a 3D fourier transform to the image and boosting certain frequencies based on the CSF of the perpendicular direction).

In some embodiments according to the present invention, determining display parameters based on a human vision system may comprise determining such parameters based on a human vision system taking into account combined information about the displaying of a first sub-image and information about the displaying of a second sub-image. In other words, determining display parameters for displaying the first sub-image may be performed dependent on both information about the displaying of a first sub-image and information about the second sub-image and/or determining display parameters for the displaying of the second sub-image may be performed dependent on both information about the displaying of a first sub-image and information about the second sub-image. The human vision system thereby thus may treat the displaying of sub-images dependent, i.e. not independent, of each other. The latter allows mimicking the human vision process in a better way, resulting in good displaying of three dimensional images.

In some embodiments, determining of display parameters for displaying of the three dimensional images may comprise determining separate information for the further displaying of first sub-images and determining separate information for the further displaying of second sub-images. For example, determining of display parameters may comprise determining, e.g. calculating a separate look up table for the further displaying of first sub-images and determining, e.g. calculating, a separate look up table for the further displaying of second sub-images. For example, when two views are used, a first look-up table LUT1 and a second look-up table LUT2 may be determined for respectively first type sub-images and second type sub-images. The different display parameters for the displaying of different sub-images thereby may be linked through a three dimensional human vision system as described above. By determining such separate information, the methods and systems according to embodiments of the present invention may provide allowing a perceptual linearization of the three dimensional display. By taking the approach of determining separate display parameters, additional degree(s) of freedom in the calibration and/or set-up of the three dimensional display system can be obtained, which may be used for a plurality of applications, e.g. in order to overcome limitations of the display system. In some embodiments, such an additional degree of freedom may be used for enhancing the image quality. Alternatively or in addition thereto, the determined display parameters may take into account or comprise a binocular luminance value and/or a binocular colour value.

The display parameters furthermore may comprise different settings of the imaging system used for generating the sub-images, such as for example different driving levels for the backlight luminance, different white point correction, different colour correction, etc. If different sub-imaging systems are used for generating the sub-images, different driving levels but also different components may be selected for the sub-imaging systems. The latter then may be performed independent of each other, resulting in the possibility to reduce loss of contrast or loss of luminance. If different sub-imaging systems are used, the colour gamut also can be extended as will be described further.

In a particular embodiment, such an additional degree of freedom may be used for increasing the bit depth. By determining the display parameters for the different views separately, a human vision system model may be provided whereby intermediate values of the overall luminescence, e.g. binocular luminance, can be obtained by particular settings of the display parameters for the displaying of different sub-images. In this way the bit depth in gray scaling and/or the number of colour tones that can be generated can be increased.

In another particular embodiment, such an additional degree of freedom may be used for increasing the colour gamut. The latter may be especially obtained when a display system is provided wherein different sub-imaging systems are used for imaging the different sub-images. If such sub-imaging systems provide colour gamuts that are different from each other, applying a human vision system model allowing different combination of the different sub-images for obtaining the same binocular luminance may be used for generating an overall larger colour gamut. For example, in a two view system wherein the first sub-imaging system provides primaries R1, G1 and B1 and a second sub-imaging system provides primaries R2, G2 and B2 being distinct from the first primaries, if the same binocular luminance can be obtained by using x1 % of the maximum obtainable luminance for the displaying of the first sub-image and x2 % of the maximum obtainable luminance for the displaying of the second sub-image as by using y1 % of the maximum obtainable luminance for the displaying of the first sub-image and y2 % of the maximum obtainable luminance for the displaying of the second sub-image, selection between both sets can be made based on the colour one wishes to obtain. The latter overall results in a larger colour gamut.

In another particular embodiment, such an additional degree of freedom may be used for increasing the depth resolution for the displaying of three dimensional images. The latter may for example be obtained in a display system wherein different sub-imaging systems can be used allowing inducing a perceived difference in depth of the imaged scene. One example of such a system may be a multilayer display system wherein different depths are induced by sub-imaging systems that are factually at different distance to the user as the sub-images are stacked onto each other. When with different contributions of the different sub-images the same binocular luminance can be obtained, selection between the different contributions may allow for increasing the depth resolution.

In another embodiment, such an additional degree of freedom may be used for increasing perceived contrast of the three dimensional images. One could optimize the characteristics of the first and second images so that the perceived binocular contrast improves.

In a preferred optional third step 230, the method further comprises applying the determined display parameters to the display system adapted for generating three dimensional images. The latter may for example be performed by providing control signals to the display system, e.g. different sub-imaging systems for imaging the different sub-images. Sub-imaging systems may be driven differently for generating the sub-images as function of the determined display parameters. Applying the determined display parameters may for example be performed by installing different display parameters, e.g. look up tables (LUT) for the different sub-imaging systems. Application of the determined display parameters may for example be provided at the level of the sub-imaging systems, may be provided at the level of the image processing part adapted for generating the sub-image data or at both levels.

In particular embodiments, the calibration may be performed dependent on the position of the user of the display system. As the perceived three dimensional image in principle will depend on the position of the user of the display system, calibration may take this into account. The calibration method therefore may comprise determining a position of a user of he display system. Different types of calibration may be selected. Display parameters can for example be determined such that upon calibration, the perceived three dimensional image is independent of the position of the user. Display parameters also can for example be determined such that upon increasing viewing angle a predetermined display parameter variation, e.g. luminance variation, is obtained for the user. When multiple users are involved, display parameters may be determined such that an optimal representation for all of the users is obtained. Again the position of the users thereby may be determined and/or taken into account. Display parameters may be determined for each of the multiple users or only for a selected number of them, whereby the display parameters for the other users, e.g. referred to as review users, are derived from the display parameters of the selected multiple users, e.g. referred to as diagnostic users. Such derivation may e.g. be based on linear interpolation between display parameters for diagnostic users, embodiments of the invention not being limited thereto. When multiple users are present, variation of the position of one user may imply recalculation of the display parameters for a number of users or for all users of the display system. If a time sequential system is used, different luminance settings, different contrast settings, different colour settings and different calibration settings may be applied for different users.

It is an advantage of embodiments according to the present invention that the calibration can be performed in real-time, e.g. during displaying on the display system. The latter assists in obtaining more appropriate three dimensional displaying throughout the use of the display system.

It is an advantage of embodiments according to the present invention that methods and systems are provided that can be made compliant with a specific image standard, a specific brightness profile and/or a specific colour profile. The predetermined standards for displaying images may for example be the DICOM standard, embodiments of the present invention not being limited thereto.

In a second aspect, the present invention relates to a method for displaying three dimensional images on a display system. The display system thereby may be adapted for generating three dimensional images by combining at least first sub-image information and second sub-image information. The method for displaying comprises displaying at least first sub-images and second sub-images using display parameters determined based on a human vision system taking into account previously obtained information about the displaying of first sub-images and previously obtained information about the displaying of second sub-images. The display parameters thereby may be determined using a method for calibrating as described in the first aspect. The same features and advantages as described above may be present in the method for displaying. Such display parameters may be implied to sub-imaging systems present for imaging different sub-images or may be implied to an image data processor adapted for processing the three dimensional image data into image data for the separate sub-images to be displayed.

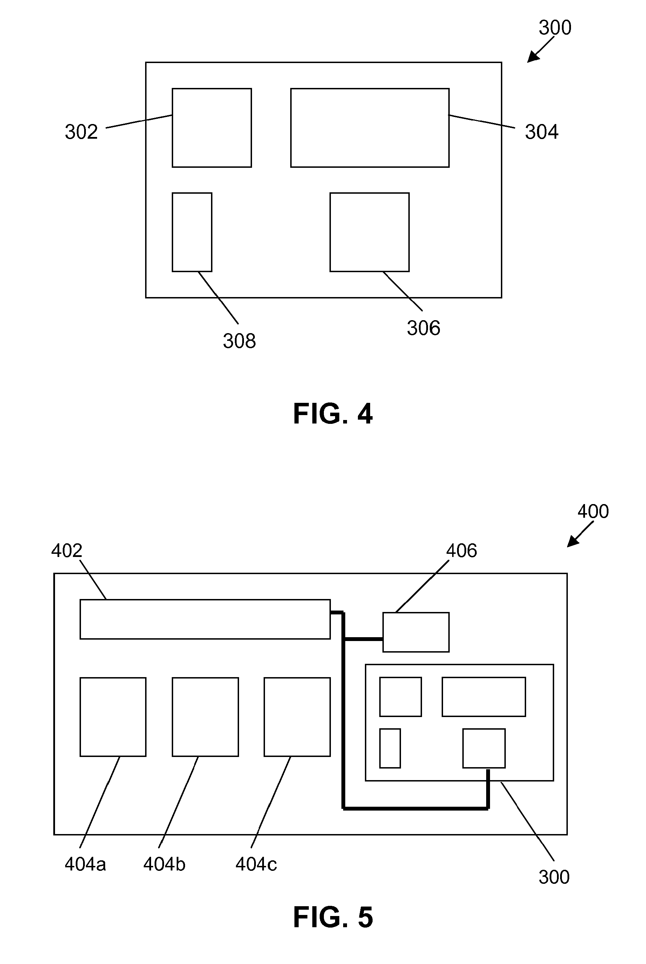

In a third aspect, the present invention relates to a calibration system for calibrating a three dimensional imaging system. The three dimensional imaging system thereby is an imaging system adapted for generating three dimensional images by combining at least first sub-image information and second sub-image information. By way of illustration, the present invention not being limited thereto, an exemplary calibration system is shown in FIG. 4, indicating standard and optional components. The calibration system 300 comprises an obtaining means 302 for obtaining at least information about the displaying of a first sub-image and information about the displaying of a second sub-image. Such an obtaining means 302 may be an input means adapted for receiving data representing information about the displaying of sub-images, e.g. separately, from for example an external memory, processor or recorder. Alternatively the obtaining means 302 may comprise a sensor or detector for detecting a signal comprising information related to or radiation properties of radiation used for the displaying of the first sub-images and detecting a signal comprising information related to radiation properties of the radiation used for the displaying of said second sub-images individually. Obtaining such information thereby may comprise, during detecting or recording such information, filtering the radiation used for displaying a predetermined type of sub-images, e.g. by filtering radiation with a particular wavelength or wavelength wave, filtering radiation with a particular polarisation state, filtering radiation emitted under a predetermined emission angle or within a predetermined emission range, etc. Obtaining may comprise selectively filtering between radiation used for displaying first sub-images and radiation used for displaying second sub-images. Obtaining information further may comprise deriving information of the displaying of the individual sub-images based on the detected radiation.

The calibration system 300 furthermore comprises a determining means 304 for determining display parameters for further displaying of images using the display system based on a human vision system taking into account information about the displaying of a first sub-image and information about the displaying of a second sub-image. The determining means 304 thereby may be adapted for determining display parameters for further displaying at least first sub-images based on a human vision system and determining display parameters for further displaying second sub-images based on a human vision system. Determined display parameters may for example comprise a three dimensional look up table or look up tables for the different sub-images, it may comprise a binocular luminance and/or a binocular colour value, etc. The determining means 304 may be adapted for determining display parameters taking into account combined information about the displaying of a first sub-image and information about the displaying of a second sub-image. The calibration system further may comprise application means 306 for applying the determined display parameters to the display system. The latter may be performed by installing the predetermined display parameters, e.g. look up tables, at the image data processing part of the display system or applying it to different sub-imaging systems used for generating sub-images. Components adapted for performing one or more tasks as performed in any of the above described calibration methods also may be present. A further optional component present in the calibration system 300 may for example be a sensor 308 for obtaining information regarding a position of a user. The different components of the calibration system 300 may be provided in hardware form or in software form. They may make use of separate processing units or may make use of part of the same processing unit. The calibration unit may be programmed to operate in an automated and/or automatic way, performing real time calibration during use of the display system, performing calibration on demand or performing calibration at predetermined times, e.g. after predetermined time intervals.

In a fourth aspect, the present invention relates to a display system adapted for generating three dimensional images by combining at least first sub-image information and second sub-image information. An example of a display system 400 according to an embodiment of the present invention is shown by way of illustration in FIG. 5, the present invention not being limited thereto. The display system 400 according to the present aspect is adapted for displaying at least first sub-images and second sub-images using display parameters determined based on a human vision system taking into account previously obtained information about the displaying of first sub-images and previously obtained information about the displaying of second sub-images. Such display parameters may be determined externally to the display system. The display system 400 may be adapted for receiving using the determined display parameters in an image data processing part 402 or in one or more sub-imaging systems 404a, 404b, 404c. The determined display parameters may be stored in a memory 406. The determined display parameters also may be determined and optionally stored in the display system 400 itself. The display system therefore may comprise a calibration system 300 as described in the third aspect of the present invention.

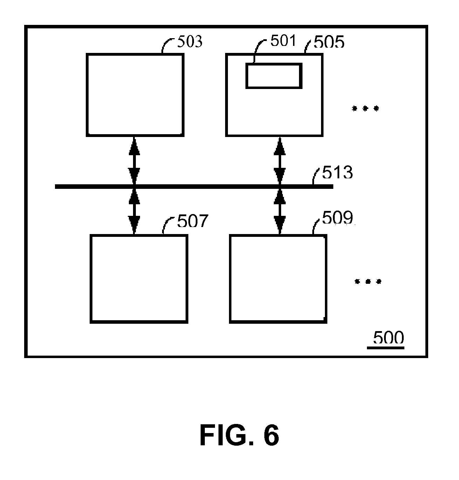

In a fifth aspect, the above-described method embodiments of the present invention for the calibration of a three dimensional display system may be implemented in a processing system 500 such as shown in Fig. 6. Fig. 6 shows one configuration of processing system 500 that includes at least one programmable processor 503 coupled to a memory subsystem 505 that includes at least one form of memory, e.g., RAM, ROM, and so forth. It is to be noted that the processor 503 or processors may be a general purpose, or a special purpose processor, and may be for inclusion in a device, e.g., a chip that has other components that perform other functions. Thus, one or more aspects of the present invention can be implemented in digital electronic circuitry, or in computer hardware, firmware, software, or in combinations of them. The processing system may include a storage subsystem 507 that has at least one disk drive and/or CD-ROM drive and/or DVD drive. In some implementations, a display system, a keyboard, and a pointing device may be included as part of a user interface subsystem 509 to provide for a user to manually input information. Ports for inputting and outputting data also may be included. More elements such as network connections, interfaces to various devices, and so forth, may be included, but are not illustrated in Fig. 6. The various elements of the processing system 500 may be coupled in various ways, including via a bus subsystem 513 shown in Fig. 6 for simplicity as a single bus, but will be understood to those in the art to include a system of at least one bus. The memory of the memory subsystem 505 may at some time hold part or all (in either case shown as 511) of a set of instructions that when executed on the processing system 500 implement the steps of the method embodiments described herein. Thus, while a processing system 500 such as shown in Fig. 6 is prior art, a system that includes the instructions to implement aspects of the methods for calibrating display systems for generating three dimensional images is not prior art, and therefore Fig. 6 is not labelled as prior art.

The present invention also includes a computer program product which provides the functionality of any of the methods according to the present invention when executed on a computing device. Such computer program product can be tangibly embodied in a carrier medium carrying machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

By way of illustration, the present invention not being limited thereto, a number of examples of calibration schemes will be described, illustrating some features and advantages of embodiments according to the present invention.

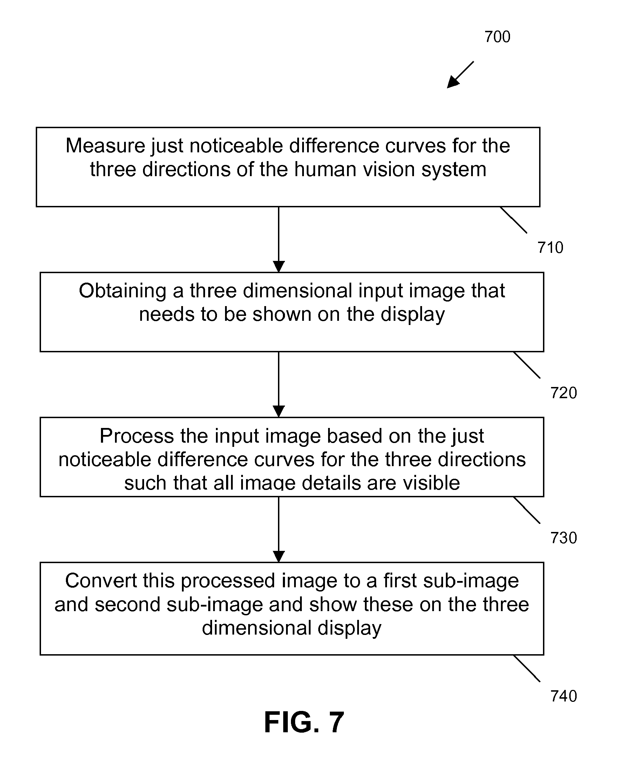

In a first particular example, as illustrated in Fig. 7, a practical application is provided of converting a three dimensional input image to the three dimensional Fourier domain, applying a filter in the three dimensional Fourier domain, transforming the three dimensional image back to the spatial domain and giving this three dimensional image as input to the display which will convert the three dimensional image to a first type and second type sub-image. The method 700 comprises the step of measuring the just noticeable difference curves for the three directions of the human vision system, as indicated in step 710. This can optionally be done during the method for calibrating but also may be done separately and thus such information may be stored already. In step 720, the method comprises obtaining a three dimensional input image that needs to be shown on the display. The three dimensional input image is then processed, in step 730, based on just noticeable difference curves for e.g. three independent directions, such that all image details are visible. The three dimensional input image or input image data does not need to be the full image data but is at least part of three dimensional input data. The processed image then is converted to a first type sub-image and second type sub-image and the sub-images are shown on the three dimensional display.

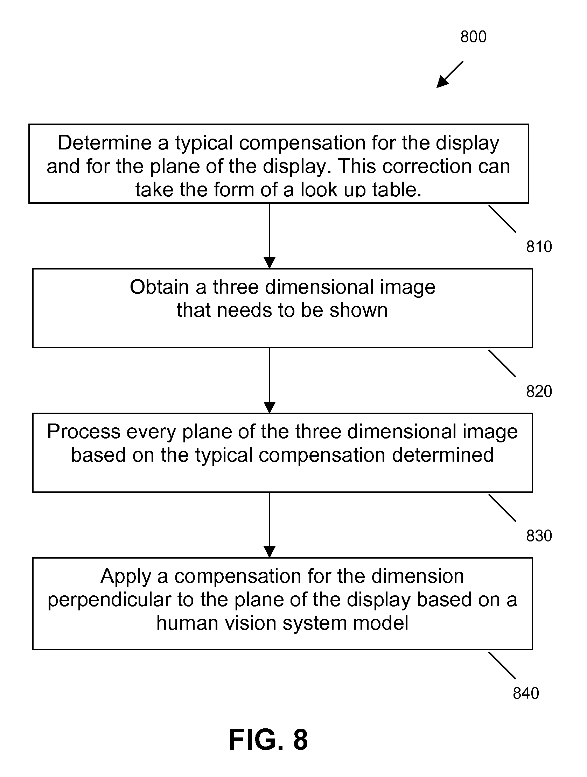

In a second particular example, as illustrated in Fig. 8, a practical application of calibration is shown where a typical compensation is used that does not longer depend on the exact image contents. Such a compensation can be done in the spatial domain as well as in the Fourier domain and it can be based for example on a three dimensional contrast sensitivity function or a contrast sensitivity function for the plane perpendicular to the display plane e.g. a just noticeable display curve for the perpendicular direction. The method 800 comprises determining a typical compensation for the display and for the plane of the display. Such a compensation may take the form of a look up table. The latter is represented in step 810. Such a determination may be performed within the calibration method or may be performed previously and stored and thus be obtained from a memory. The method 800 comprises obtaining a three dimensional image that is to be shown, as indicated in step 820. The method furthermore comprises processing every plane of the three dimensional image based on the typical compensation determined for a display plane. The method 800 also comprises applying a compensation for the dimension perpendicular to the plane of the display based on a human vision system model. This compensation can be done in the spatial domain or in the fourier domain. It can e.g. be based on a three dimensional contrast sensitivity function or a contrast sensitivity function for the plane perpendicular to the display plane, e.g. a just noticeable difference curve for the perpendicular direction.The latter is illustrated in step 840.

In a third particular example, a practical illustration of a DICOM GSDF calibration in three dimensions is described with respect to an exemplary method as shown in FIG. 9. The method 900 starts from a predetermined, stored, calculated or measured two dimensional DICOM GSDF standard defining a luminance transfer curve that needs to be followed, as indicated in step 910. The method further comprises, as indicated in step 920, calculating a look up table for the first sub-image and a look up table for the second sub-image such that the combined binocular luminance will follow the two dimensional DICOM GSDF curve. The latter may e.g. be performed by means of a binocular human vision system. In step 930, calibration in the perpendicular direction is performed. The latter may for example be performed by applying a filter to the three dimensional input image such that also in the perpendicular direction all details will be visible.

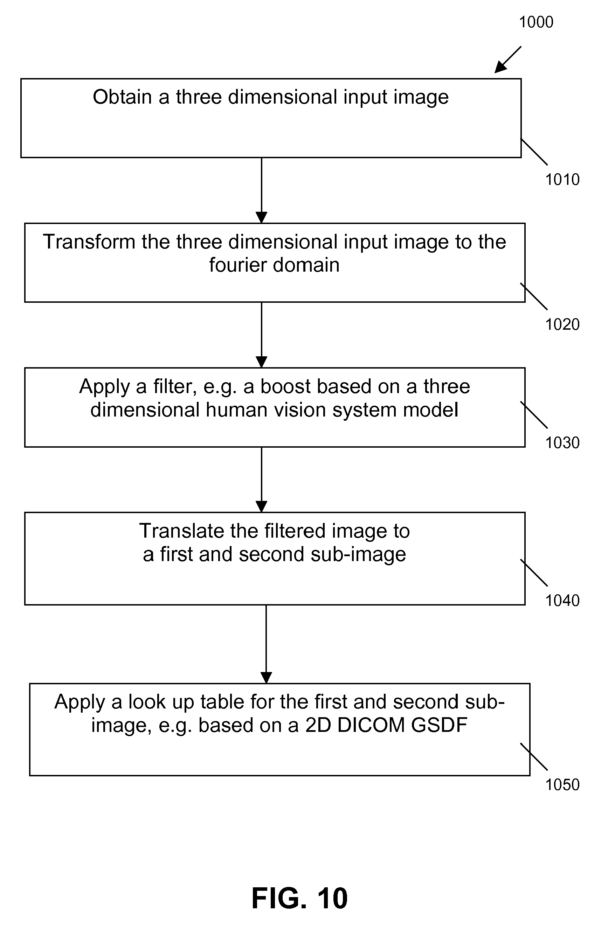

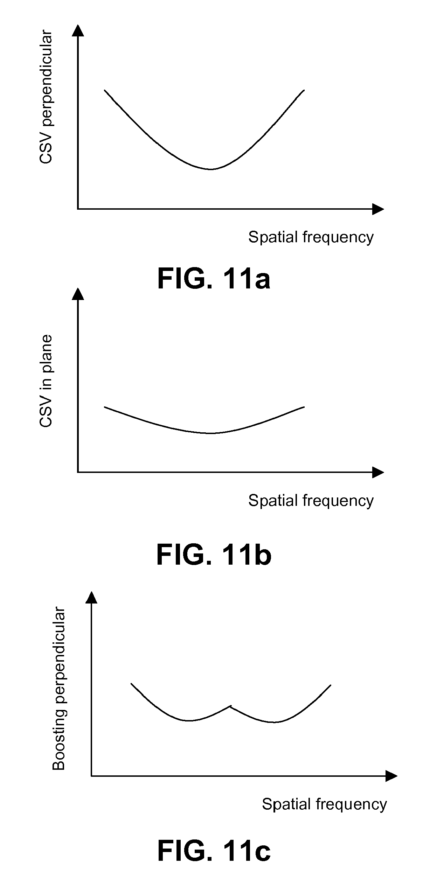

In a fourth particular example, another practical implementation for calibration is described, as illustrated in FIG. 10. The method 1000 comprises obtaining a three dimensional input image, as shown in step 1010. The three dimensional input image then is transformed to the Fourier domain, using common known techniques. The latter is represented by step 1020. In the Fourier domain, a filter is applied to the three dimensional input image. The latter may for example comprise applying a boost based on a three dimensional human vision system model, as illustrated in step 1030. In order to determine the boosting to be done in the perpendicular direction comparison can be made between the contrast sensitivity function in the perpendicular direction and the contrast sensitivity function in the in-plane direction. If the eye is for example less sensitive in the perpendicular direction then an additional boost can be applied as indicated in FIG. 11c. Based on the CSF in the perpendicular direction as function of the spatial frequency, one example thereof being illustrated in FIG. 11a, and the contrast sensitivity function in plane as function of the spatial frequency, one example thereof being illustrated in FIG. 11b, the amount of boost can be estimated or calculated, e.g. as indicated in FIG. 11c based on the given examples of FIG. 11a and FIG. 11b. As the display will already be calibrated in-plane because of the LUTs, the boosting leads to an appropriate calibration. The filtered image is, in step 1040, translated to a first type and second type sub-image. Thereafter, a look up table for the first type and the second type sub-images may be applied. Such a look up table may be based on a two dimensional DICOM GSDF. The latter is represented in step 1050.

It is to be understood that although preferred embodiments, specific constructions and configurations, as well as materials, have been discussed herein for devices according to the present invention, various changes or modifications in form and detail may be made without departing from the scope of this invention as defined by the appended claims. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A method (200) for calibrating a display system (400) adapted for generating three dimensional images by combining at least first sub-image information and second sub-image information, the method comprising
- obtaining (210) at least information about the displaying of a first sub-image and/or information about the displaying of a second sub-image,
- determining (220) display parameters for further displaying using the display system based on a human vision system taking into account information about the displaying of a first sub-image and information about the displaying of a second sub-image.

2. A method (200) for calibrating according to claim 1, wherein said determining (220) display parameters for further displaying comprises determining separate display parameters for further displaying first sub-images based on a human vision system and determining separate display parameters for further displaying second sub-images based on a human vision system.

3. A method (200) for calibrating according to any of claims 1 to 2, wherein determining (220) display parameters comprises calculating a separate look up table for the further displaying of first sub-images and calculating a separate look up table for the further displaying of second sub-images.

4. A method (200) for calibrating according to any of claims 2 to 3, wherein determining (220) separate display parameters for the further displaying of first sub-images and determining separate display parameters for the further displaying of second sub-images provides an additional degree of freedom for enhancing the image quality.

5. A method (200) for calibrating according to claim 4, wherein the additional degree of freedom is used for enhancing the image quality by any or a combination of increasing a bit depth, a colour gamut, a peak luminance, a contrast ratio or a depth resolution.

6. A method (200) according to any of the previous claims, wherein determining (220) display parameters comprises taking into account a contrast sensitivity function of the eye for in-plane information and a contrast sensitivity function for the eye for information in the direction substantially perpendicular to the display plane.

7. A method (200) according to any of the previous claims, wherein determining (220) display parameters comprises determining a modulation transfer function curve for a direction perpendicular to the plane of the display system or of the eye of the user.

8. A method (200) for calibrating according to any of the previous claims, wherein taking into account information comprises taking into account combined information about the displaying of a first sub-image and information about the displaying of a second sub-image.

9. A method (200) according to any of the previous claims, wherein said determining (220) comprises determining display parameters for the displaying of the first sub-image dependent on both information about the displaying of a first sub-image and information about the second sub-image and/or determining display parameters for the displaying of the second sub-image dependent on both information about the displaying of a first sub-image and information about the second sub-image.

10. A method (200) for calibrating according to any of the previous claims, the method further comprising applying said determined display parameters to the display system adapted for generating three dimensional images.

11. A method (200) for calibrating according to any of the previous claims, wherein obtaining (210) at least information about the displaying of a first sub-image and information about the displaying of a second sub-image comprises obtaining a transfer curve for the displaying of first sub-images and a transfer curve for the displaying of second sub-images.

12. A method (200) for calibrating according to any of the previous claims, wherein the human vision system is a binocular human vision system.

13. A method (200) according to any of the previous claims, wherein said determining (220) display parameters comprises determining a binocular luminance and/or a binocular colour value.

14. A method (200) according to any of the previous claims, wherein said determining (220) is performed in real-time during displaying on the display system.

15. A method (200) according to any of the previous claims, wherein determining (220) display parameters comprises taking into account predetermined standards for displaying images.

16. A method (200) according to any of the previous claims, the display system comprising a plurality of imaging sub-systems for imaging sub-images, wherein said sub-images are driven differently for generating the sub-images as function of the determined display parameters.

17. A method (200) according to any of the previous claims, wherein said determining (220) display parameters comprises determining display parameters depending on a position of the user of the display system.

18. A method (200) according to any of the previous claims, wherein said determining (220) display parameters comprises adjusting all display parameters upon variation of a position of one user.

19. A method (200) according to any of the previous claims, wherein determining (220) display parameters comprises determining display parameters for one or more emission angles and deriving from said determined display parameters, display parameters for other emission angles.

20. A method (200) for calibrating according to any of the previous claims, wherein determining (220) display parameters comprises applying a filter based on a binocular human vision system or a three dimensional modulation transfer function.

21. A method (200) for calibrating according to the previous claim, wherein the filter is applied to the input image data after the input image data has been Fourier transformed.

22. A method for displaying three dimensional images on a display system (400) adapted for generating three dimensional images by combining at least first sub-image information and second sub-image information, the method comprising
- displaying at least first sub-images and second sub-images using display parameters determined based on a human vision system taking into account previously obtained information about the displaying of first sub-images and previously obtained information about the displaying of second sub-images.

23. A method for displaying according to claim 22, the method furthermore comprising a method for calibrating (200) according to any of claims 1 to 21.

24. A calibration system (300) for calibrating a display system (400) adapted for generating three dimensional images by combining at least first sub-image information and second sub-image information, the system comprising
- obtaining means (302) for obtaining at least information about the displaying of a first sub-image and information about the displaying of a second sub-image, and
- determining means (304) for determining display parameters for further displaying using the display system (400) based on a human vision system taking into account information about the displaying of a first sub-image and information about the displaying of a second sub-image.

25. A calibration system (300) according to claim 24, wherein said determining means (304) is adapted for determining display parameters for further displaying first sub-images based on a human vision system and determining display parameters for further displaying second sub-images based on a human vision system.

26. A calibration system (300) according to any of claims 24 to 25, wherein said determining means (304) is adapted for determining display parameters taking into account combined information about the displaying of a first sub-image and information about the displaying of a second sub-image.

27. A calibration system (300) according to any of claims 24 to 26, the calibration system (300) comprising application means (306) for applying said determined display parameters to the display system.

28. A calibration system (300) according to any of claims 24 to 27, the obtaining means (302) comprising a sensor adapted for obtaining separate information regarding displaying of first sub-images and/or separate information regarding displaying of second sub-images.

29. A display system (400) adapted for generating three dimensional images by combining at least first sub-image information and second sub-image information, the display system being adapted for displaying at least first sub-images and second sub-images using display parameters determined based on a human vision system taking into account previously obtained information about the displaying of first sub-images and previously obtained information about the displaying of second sub-images.

30. A display system (400) according to claim 29, the display system (400) comprising a calibration system (300) according to any of claims 24 to 28.

31. A computer program product for, when executed on a computer, performing a method for calibrating a display system according to any of claims 1 to 21.

32. A machine readable data storage device storing the computer program product of claim 31.

33. Transmission of the computer program product of claim 31, over a local or wide area telecommunications network.
